# EUROPÄISCHE PATENTSCHRIFT

(11) **EP 3 233 628 B1**
(45) Veröffentlichungstag und Bekanntmachung des Hinweises auf die Patenterteilung: **12.06.2019**
(21) Anmeldenummer: 15813042.7
(22) Anmeldetag: 16.12.2015
(51) Int. Cl.: B64C 27/02, B64C 27/82

(54) **TRAGSCHRAUBER MIT EINER STROMLINIENFÖRMIGEN AUSSENKONTUR**
AUTOGYRO WITH A STREAMLINED OUTER CONTOUR
AUTOGIRE PRÉSENTANT UN CONTOUR EXTÉRIEUR AÉRODYNAMIQUE

(30) Priorität: 19.12.2014 DE 102014119273
(43) Veröffentlichungstag der Anmeldung: 25.10.2017
(73) Patentinhaber: Fraundorfer, Christoph, 86633 Neuburg a. d. Donau (DE)
(72) Erfinder: Fraundorfer, Christoph, 86633 Neuburg a. d. Donau (DE)
(74) Vertreter: Bergmeier, Werner
(86) Internationale Anmeldenummer: PCT/EP2015/080034
(87) Internationale Veröffentlichungsnummer: WO 2016/097006

(56) Entgegenhaltungen:
- EP-A1- 2 279 943
- CN-A- 102 161 380
- DE-T2- 69 315 427
- US-A1- 2008 251 308
- US-A1- 2012 025 011

## Beschreibung

Die vorliegende Erfindung betrifft einen Tragschrauber mit einem Rumpf, mit einem im oberen Bereich des Rumpfes angeordneten Mast und mit einem Rotor, der im Bereich des Endes des Mastes drehbar angeordnet und durch eine Luftströmung in Autorotation versetzbar ist. Der Tragschrauber umfasst ebenfalls einen im hinteren Bereich des Rumpfes angeordneten und antreibbaren Propeller, der einen Vortrieb des Tragschraubers hervorruft, und ein hinter dem Propeller angeordnetes Leitwerk. Zumindest eine Strebe, die sich vom Propeller radial nach außen beabstandet an diesem in Tragschrauberlängsrichtung vorbeierstreckt, verbindet das Leitwerk mit dem Rumpf.

Die Anfänge des Tragschraubers, der auch Gyrokopter oder Autogyro genannt wird, gehen zurück auf die 1920er Jahre und sind somit in der Luftfahrttechnik weit bekannt und gehören somit in ihrer Grundausbildung zum Stand der Technik.

Ein Tragschrauber kann auch in die Kategorie Drehflügler eingeordnet werden. Eine andere Form des Drehflüglers ist dabei der Hubschrauber, welcher einen durch einen Motor angetriebenen Hauptrotor aufweist. Im Gegensatz dazu weist der Tragschrauber einen durch Autorotation in Drehung versetzbaren Hauptrotor auf, welcher einen Auftrieb erzeugt. Der Hauptrotor ist dabei explizit nicht von einem Motor angetrieben, sodass auch die Notwendigkeit eines drehmomentausgleichenden Heckrotors entfällt.

Aus der DE 693 15 427 T2 ist ein derartiger Tragschrauber bekannt. Weitere Merkmale des Tragschraubers sind der Rumpf, der alle für den Flug unterstützenden Instrumente und Geräte, wie Antriebsmotor, aber auch die Kabine für Passagiere, beinhaltet. An einem hinteren Ende des Rumpfes ist ein Propeller angeordnet, der einen Vortrieb des Tragschraubers erzeugt. Hinter dem Propeller ist ein Leitwerk angeordnet, das zur Stabilisierung dient, aber auch ein Höhen- und/oder Seitenruder aufweist, womit der Tragschrauber gesteuert wird. Das Leitwerk ist mittels einer Strebe an dem Rumpf befestigt. Nachteilig bei dieser Ausführung ist jedoch, dass es hinter dem Propeller zu Verwirbelungen einer Luftströmung kommt. Das Leitwerk wird somit turbulent angeströmt. Dies führt zu einem erhöhten Flugwiderstand und somit unter anderem zu einem erhöhten Treibstoffverbrauch. Des Weiteren verschlechtern sich hierdurch die Flugstabilität und Manövriereigenschaften des Tragschraubers.

Aus der US 2008/0251308 A1 ist ferner ein Tragschrauber bekannt, der einen Rumpf mit einer im Mittelbereich angeordneten zylindrischen Lauffläche aufweist. Auf dieser Lauffläche ist ein Propeller drehbar gelagert. Nachteilig hierbei ist, dass über den Rumpf Vibrationen vom Propeller auf das Leitwerk übertragen werden. Hierdurch werden die Stabilitäts- und Manövriereigenschaften des Tragschraubers negativ beeinflusst.

Aufgabe der Erfindung ist es somit, einen Tragschrauber mit verbesserten Stabilitäts- und Manövriereigenschaften sowie reduziertem Luftwiderstand zu schaffen.

Die Aufgabe wird mit einem Tragschrauber nach den unabhängigen Patentansprüchen 1 und 14 gelöst.

Vorgeschlagen wird ein Tragschrauber mit einem Rumpf. Vorzugsweise ist ein Teil des Rumpfes als Personenkabine ausgebildet. Der Rumpf kann aber auch alle für den Betrieb des Tragschraubers benötigten weiteren Komponenten, wie z.B. Treibstofftank, Instrumente und Antriebsmotor beinhaltet. In einem oberen Bereich des Rumpfes ist ein Mast angeordnet, welcher im Bereich seines Endes einen drehbar angeordneten Rotor aufweist. Der Rotor ist durch eine Luftströmung in Autorotation versetzbar, sodass ein Auftrieb des Tragschraubers erzeugt wird. Zusätzlich kann der Rotor durch einen Prerotator antreibbar sein, welcher den Rotor zum Starten, insbesondere wenn der Tragschrauber noch keine Fahrt aufweist, in Rotation versetzt. Dadurch kann die benötigte Startstrecke zum Abheben des Tragschraubers verkürzt werden. Mittels des Mastes wird die durch den Rotor erzeugte Auftriebskraft auf den Rumpf übertragen. Die Luftströmung entsteht im Allgemeinen durch eine relative Geschwindigkeit des Tragschraubers gegenüber der umgebenden Luft, ist also im Wesentlichen durch einen Fahrtwind gegeben und strömt somit aus Richtung der Flugrichtung an den Tragschrauber. In einem hinteren Bereich des Rumpfes ist ein antreibbarer Propeller angeordnet. Dieser wird insbesondere durch einen Verbrennungsmotor angetrieben und erzeugt einen Vortrieb des Tragschraubers. Zumindest teilweise hinter dem Propeller ist ein Leitwerk angeordnet. Vorzugsweise umfasst das Leitwerk ein Seiten- und/oder Höhenruder mit denen der Tragschrauber steuerbar ist. Das Leitwerk ist mittels zumindest einer Strebe, die sich vom Propeller radial nach außen beabstandet an diesem in Tragschrauberlängsrichtung vorbeierstreckt, mit dem Rumpf verbunden. Die Strebe bildet einen primären Lastpfad aus, welcher das Gewicht und die Luftlasten des Leitwerks über die zumindest eine Strebe an den Rumpf weiterleitet. Die Strebe erstreckt sich somit in einer Rückansicht des Tragschraubers an der kreisrunden Propellerbewegungsfläche radial beabstandet an dem Propeller vorbei. Durch die mittelbare Verbindung des Leitwerks mit dem Rumpf mittels der zumindest einen Strebe, können das Leitwerk und der Propeller gegenseitig von Schwingungen entkoppelt werden. Schwingungsentkoppelt bedeutet demnach hier, dass keine Schwingungen vom Leitwerk, die durch Luftströmungen entstehen können, auf den Propeller, insbesondere die Motorwelle, übertragen werden können. Ebenso wird verhindert, dass Schwingungen, die der Propeller und/oder dessen Antriebsmotor erzeugen, insbesondere von der Motorwelle, auf das Leitwerk übertragen werden. Die Motorwelle kann vorzugsweise als Voll- oder Hohlwelle ausgebildet sein.

Erfindungsgemäß weist das Leitwerk einen koaxial zum hinteren Rumpfende angeordneten Leitwerksfortsatz auf. Dieser erstreckt sich in Längsrichtung des Tragschraubers vom Leitwerk ausgehend nach vorne in Richtung des hinteren Rumpfendes. Des Weiteren ist der Leitwerksfortsatz, insbesondere dessen rumpfseitiges Ende, vom hinteren Rumpfende beabstandet. Der Leitwerksfortsatz kann hierbei insbesondere in Längsrichtung des Tragschraubers beabstandet sein. Zusätzlich oder alternativ kann der Leitwerksfortsatz zur Längsachse des Tragschraubers in Radialrichtung beabstandet sein. In diesem Fall kann der Leitwerksfortsatz mit dem Rumpfende und/oder einem Propellerfortsatz in Längsrichtung des Tragschraubers betrachtet teilweise überlappen. Vorzugsweise ragt in diesem Fall das freie Ende des Leitwerksfortsatzes teilweise in eine Öffnung des hinteren Rumpfendes und/oder des Propellerfortsatzes hinein. Hierbei ist das hintere Rumpfende und/oder das freie Ende des Propellerfortsatzes gegenüber dem dazu hinteren Leitwerksfortsatz vorzugsweise radial außerhalb und das freie Ende des Leitwerksfortsatzes radial innerhalb angeordnet. Hierdurch kann die Luft vom Rumpfende und/oder Propellerfortsatz zum Leitwerksfortsatz anliegend strömen. Der Leitwerksfortsatz ist somit derart vom hinteren Rumpfende und/oder Propellerfortsatz, insbesondere in Bezug zur Tragschrauberlängsachse in Längs- und/oder Radialrichtung, beabstandet, dass im Bereich zwischen diesen, insbesondere unmittelbar zwischen diesen beiden, ein Spalt ausgebildet ist. Der Spalt kann hierbei beispielsweise eine im Wesentlichen zylindrische und/oder konische Form aufweisen. Insbesondere kann mittels des Spaltes auch ein Kühlluftauslass der Antriebseinheit gegeben sein. Des Weiteren kann zumindest ein Teil als Hohlzylinder und/oder Hohlkonus ausgebildet sein. Der Leitwerksfortsatz ist vorzugsweise mit dem Leitwerk verbunden und/oder geht nach hinten in seiner Kontur in das Leitwerk, insbesondere in das Seitenleitwerk, über. Der Leitwerksfortsatz geht somit fließend in das Leitwerk, insbesondere Seitenleitwerk, über. Das Seitenleitwerk ist der sich in Hochrichtung des Tragschraubers erstreckende Teil des Leitwerks. Ferner ist unter dem Begriff "Seitenleitwerk" der feststehende Teil und unter dem Begriff "Seitenruder" die bewegliche Teil bzw. Fläche zu verstehen. Das Leitwerk, insbesondere das Seitenrleitwerk, und der Leitwerksfortsatz sind vorzugsweise einteilig ausgebildet. Außerdem bilden der Rumpf zumindest im Bereich seines hinteren Rumpfendes und der Leitwerksfortsatz zusammen eine stromlinienförmige Außenkontur aus. Um eine derartige stromlinienförmige Außenkontur wird eine Luftströmung um den Rumpf, insbesondere um den Bereich des hinteren Rumpfendes, zu dem Leitwerksfortsatz und zu dem Leitwerk weitergeleitet. Das Leitwerk, insbesondere das Seitenleitwerk, wird somit von einer homogenen Luftströmung angeströmt, wodurch die steuernde Wirkung des Seitenruders verbessert wird. Eine stromlinienförmige Außenkontur hat des Weiteren den Vorteil, dass eine um diese Außenkontur strömende Luftströmung im Wesentlichen anliegend ausgebildet ist. Anliegende Strömungen weisen nur wenige bis keine Verwirbelungen auf. Weniger Verwirbelungen führen zu einem geringen Treibstoffverbrauch, einem stabileren Flugverhalten des Tragschraubers und zu geringeren Geräuschentwicklungen. Mittels des Leitwerksfortsatzes kann somit die Luftströmung vom Bereich des Rumpfendes im Wesentlichen anliegend bis zum Leitwerk geführt werden. Des Weiteren ist die im Bereich des Rumpfendes angeordnete Antriebseinheit, insbesondere eine Motorwelle und/oder der Propeller, und das Leitwerk voneinander schwingungsentkoppelt. Der Leitwerksfortsatz ist nicht unmittelbar im Bereich des Rumpfendes sondern mittelbar, nämlich insbesondere über die zumindest eine Strebe, mit dem Rumpf verbunden. Das Rumpfende und der Leitwerksfortsatz sind in Längsrichtung des Tragschraubers voneinander beabstandet.

Eine vorteilhafte Weiterentwicklung der Erfindung ist es, wenn im Bereich hinter dem Propeller ein Propellerfortsatz angeordnet ist, der sich vorzugsweise koaxial nach hinten in Richtung des Leitwerksfortsatzes erstreckt. Durch den Propellerfortsatz, der sich dem Leitwerksfortsatz entgegenstreckt, kann der Leitwerksfortsatz kürzer ausgebildet sein. Durch diese Verkürzung des Leitwerksfortsatzes wird ebenfalls das Gewicht des Leitwerksfortsatzes verringert, was zu einer Entlastung des Leitwerks führt. Durch den Propellerfortsatz ist ebenso eine stromlinienförmige Außenkontur des Rumpfes, insbesondere des Bereichs des hinteren Rumpfendes, des Propellerfortsatzes und des Leitwerksfortsatzes gegeben. Des Weiteren wird das Leitwerk, insbesondere das Seitenleitwerk, von einer anliegenden Luftströmung angeströmt. Der Propellerfortsatz kann auch derart ausgebildet sein, dass dieser als Radiallüfter, insbesondere für die Antriebseinheit, wirkt.

Zusätzlich ist es von Vorteil, wenn der Propellerfortsatz von dem Leitwerksfortsatz beabstandet ist, um beide Fortsätze von Schwingungen zu entkoppeln. Die Schwingungen die der Propeller erzeugt, werden von diesem nicht auf den Leitwerksfortsatz und somit auf das Leitwerk übertragen. Ebenso werden Schwingungen auch nicht vom Leitwerk an den Propeller, und insbesondere nicht über eine Motorwelle an die Antriebseinheit, weitergeleitet. Dies ist dahingehend vorteilhaft, da Schwingungen eines Bauteils zu einem erhöhten Verschleiß selbigen führen und in diesem Fall eine frühzeitigere Beschädigung der Antriebseinheit hervorrufen würden. Ebenso wird die Flugleistung verbessert, da ein schwingendes Leitwerk ebenfalls die umgebende Luft verwirbelt und so das Flugverhalten und die Flugleistung negativ beeinflusst werden. Der Leitwerksfortsatz kann hierbei insbesondere in Längsrichtung des Tragschraubers beabstandet sein. Zusätzlich oder alternativ kann der Leitwerksfortsatz zur Längsachse des Tragschraubers in Radialrichtung beabstandet sein. In diesem Fall kann der Leitwerksfortsatz mit dem Propellerfortsatz in Längsrichtung des Tragschraubers betrachtet teilweise überlappen. Hierbei ist der in Bezug zur Flugrichtung betrachtete vordere Propellerfortsatz gegenüber dem dazu hinteren Leitwerksfortsatz vorzugsweise radial außerhalb und der Leitwerksfortsatz radial innerhalb angeordnet. Hierdurch kann die Luft vom Propellerfortsatz zum Leitwerksfortsatz anliegend strömen.

Zusätzlich oder alternativ ist es vorteilhaft, wenn der Propellerfortsatz zusammen mit dem Rumpf zumindest im Bereich seines hinteren Rumpfendes und dem Leitwerksfortsatz eine zusammenhängende stromlinienförmige Außenkontur ausbilden. Auch diese führt zu einer anliegenden Strömung um eine derartige Außenkontur, was zu einem geringeren Treibstoffverbrauch, zu geringeren Geräuschentwicklungen und zu einem ruhigerem Flugverhalten des Tragschraubers führt.

Ebenso ist es von Vorteil, wenn der Propellerfortsatz und der Leitwerksfortsatz gleich lang sind oder einer der beiden Fortsätze länger als der andere ausgebildet ist. Da die beiden Fortsätze voneinander beabstandet sind, bilden diese demnach einen Spalt aus. Ebenso führt z.B. ein kurzer Leitwerksfortsatz zu einem langen Propellerfortsatz (und umgekehrt). Ein kurzer Leitwerksfortsatz weist ein dementsprechend geringeres Gewicht auf, was das Leitwerk wiederum entlastet. Für den Fall, dass der Propellerfortsatz mit dem Propeller drehfest verbunden ist, kann es von Vorteil sein, wenn der Propellerfortsatz kurz ausgebildet ist. Dadurch wird weniger Masse des Propellerfortsatzes mitrotiert, was im Falle von Unwuchten des Propellerfortsatzes negative Auswirkungen hätte. Falls beide Fortsätze gleiche Längen aufweisen, kann ein Kompromiss aus beiden Effekten, eines kurzen Leitwerksfortsatzes und kurzen Propellerfortsatz, erreicht werden.

Ferner ist es von Vorteil, wenn der Propeller- und/oder der Leitwerksfortsatz rotationssymmetrisch um eine Längsachse ausgebildet ist. Die rotationssymmetrische Form der Fortsätze ist besonders einfach zu konstruieren und herzustellen, was Kosten in der Fertigung und Entwicklung einspart. Außerdem bietet eine derartige Form aerodynamische Vorteile.

Ein Weiterer Vorteil ist es, wenn der Propeller als Umlaufpropeller ausgebildet ist. Der Umlaufpropeller weist dabei eine Hohlwelle auf, die um eine Achse rotiert. Durch diese Hohlwelle kann in Längsrichtung des Tragschraubers z.B. ein Halteelement für den Propellerfortsatz durchgeführt sein, mittels dem der Propellerfortsatz mit dem Rumpf verbunden ist. Vorzugsweise bilden somit der Rumpf, das Halteelement und der Propellerfortsatz eine gemeinsame Einheit aus. Das Ende des Propellerfortsatzes bildet somit vorzugsweise das Rumpfende. Der Propeller ist somit in Längsrichtung des Tragschraubers vom Rumpfende bzw. vom Ende des Propellerfortsatzes in Bezug zur Flugrichtung nach vorne beabstandet. Vorzugsweise ist die Hohlwelle drehbar auf dem Halteelement gelagert. Dadurch kann der Propellerfortsatz gegenüber dem sich drehenden Propeller feststehen und drehfest mit dem Rumpf verbunden werden. Da der Propellerfortsatz somit nicht mit dem Propeller mitrotiert, wird eine insgesamt rotierende Masse verringert. Durch eine Verringerung der rotierenden Massen werden Vibrationen verringert, die durch Unwuchten der rotierenden Massen entstehen.

Wenn der Propellerfortsatz als Teil des Rumpfes ausgebildet ist, bringt dies weitere Vorteile mit sich. Dadurch muss der Propellerfortsatz nicht als einzelnes Bauteil konstruiert werden, sondern kann mit dem Rumpf als Einheit hergestellt werden. Dies spart Kosten bei der Entwicklung ein. Vorteilhafterweise sind der Rumpf im Bereich seines Rumpfendes und der Propellerfortsatz einteilig ausgebildet. Vorzugsweise bildet in diesem Fall das freie Ende des Propellerfortsatzes das hintere Rumpfende aus. Der hierbei vorzugsweise als Umlaufpropeller ausgebildete Propeller ist dann in Flugrichtung vom hinteren Rumpfende bzw. vom freien Ende des Propellerfortsatzes beabstandet.

Auch ist es von Vorteil, wenn der Propeller drehbar am hinteren Rumpfende, insbesondere auf einer über das hintere Rumpfende hinausragenden Motorwelle, angeordnet ist, wobei die Motorwelle vorzugsweise als Vollwelle ausgebildet ist. Diese Anordnung vereinfacht die Konstruktion des Tragschraubers. Auch ist ein einfacher Ein- und/oder Ausbau des Propellers möglich, da keine anderen Bauteile entfernt werden müssen. Um dagegen Gewicht einzusparen, kann die Motorwelle auch als Hohlwelle ausgebildet sein.

Ein Vorteil ist es, wenn der Propellerfortsatz als Teil des Propellers ausgebildet ist und/oder mit diesem drehfest verbunden ist. Hierdurch rotiert der Propellerfortsatz mit dem Propeller mit. Auch dies vereinfacht die Konstruktion und somit die Herstellungskosten.

Vorteilhaft ist es, wenn der Spalt unmittelbar zwischen dem hinteren Rumpfende, das - insbesondere im Falle eines Umlaufpropellers - durch das freie Ende des Propellerfortsatzes gebildet sein kann, und dem Ende des Leitwerksfortsatzes ausgebildet ist. In diesem Fall erstreckt sich somit der Spalt vom Leitwerksfortsatz, insbesondere von dessen in Flugrichtung zeigenden freien Ende, ausgehend bis zum Rumpf, insbesondere bis zu dessen entgegen die Flugrichtung zeigenden hinteren Rumpfende und/oder Propellerfortsatz.

Auch ist es vorteilhaft, wenn der Spalt mittelbar zwischen dem hinteren Rumpfende und dem freien Ende des Leitwerksfortsatzes ausgebildet ist. Hierbei weist der Rumpf vorzugsweise einen rotierbaren Propellerfortsatz auf, wobei der Spalt vorzugsweise unmittelbar zwischen dem Propellerfortsatz und dem Leitwerksfortsatz ausgebildet ist. In diesem Fall erstreckt sich somit der Spalt vom Leitwerksfortsatz, insbesondere von dessen in Flugrichtung zeigenden Ende, ausgehend bis zum Propellerfortsatz, insbesondere bis zu dessen entgegen die Flugrichtung zeigenden Ende.

Um trotz der durch den Spalt bewirkten Schwingungsentkopplung eine gewisse gleichbleibende Beabstandung des Leitwerks sicherstellen zu können, ist es vorteilhaft, wenn der Tragschrauber ein Dämpfungselement aufweist. Über das Dämpfungselement verläuft ein sekundärer Lastpfad, welcher Zug- und/oder Druckkräfte, die das Leitwerk durch eine Bewegung in Tragschrauberlängsrichtung, insbesondere gegenüber dem hinteren Rumpfende, erzeugt, weitergibt, ohne die Ausdehnung des Spaltes merklich zu verändern. Das Dämpfungselement umfasst ein schwingungsentkoppeltes Lager, z.B. ein Elastomerlager, sodass das Dämpfungselement keine oder nur sehr wenige Schwingungen weiterleitet. Das Dämpfungselement erstreckt sich vorzugsweise in einem Teilbereich des Spaltes - d.h. nicht über das gesamte durch den Spalt gebildete Freiraumvolumen - über die gesamte Länge des Spaltes. Die Länge des Spaltes ist hierbei durch die Strecke zwischen zwei zueinander benachbarten unterschiedlichen Bauteilen der stromlinienförmigen und mehrteiligen Rumpfeinheit, insbesondere dem Leitwerksfortsatz und dem Propellerfortsatz, gebildet. Vorzugsweise verbindet das Dämpfungselement den Leitwerksfortsatz schwingungsdämpfend mit dem Rumpf und/oder dem Propellerfortsatz.

Auch ist es vorteilhaft, wenn das Dämpfungselement an seinem einen Ende drehfest mit dem Leitwerksfortsatz verbunden ist und/oder einteilig mit diesem ausgebildet ist. Insbesondere im Falle eines Umlaufpropellers ist es vorteilhaft, wenn das Dämpfungselement an seinem anderen Ende drehfest mit dem Propellerfortsatz verbunden ist. Alternativ dazu ist es bei einem sich mit dem Propeller mitrotierenden Propellerfortsatz vorteilhaft, wenn das Dämpfungselement an seinem anderen Ende drehbar gelagert mit dem Propellerfortsatz verbunden ist.

Vorteilhaft ist es, wenn die zumindest eine Strebe unmittelbar oder mittelbar, insbesondere über einen Flügel, mit dem Rumpf verbunden ist.

Von Vorteil ist es ebenso, wenn das Leitwerk mittels einer, insbesondere einzigen, mittig in Längsrichtung zum Tragschrauber verlaufenden Strebe mit dem Rumpf verbunden ist. Eine einzige Strebe ist eine material- und somit kosteneinsparende Möglichkeit das Leitwerk mit dem Rumpf zu verbinden. Außerdem wird Gewicht eingespart, was die Flugleistung des Tragschraubers verbessert.

Eine weitere vorteilhafte Ausführung ist es, wenn seitlich an dem Rumpf jeweils zumindest eine Tragfläche angeordnet ist. Diese Tragflächen können dabei leicht nach unten oder oben gerichtet sein. Ebenso können die Tragflächen als Knickflügel, wodurch die Tragflächen einen Knick zumeist nach oben aufweisen, ausgebildet sein. Des Weiteren können die Tragflächen sogenannte Winglets an ihren Enden aufweisen. Die Winglets dienen im Allgemeinen zur Verringerung von Wirbeln, die an den äußeren Spitzen von Tragflächen entstehen. Diese Winglets verringern somit einen Flugwiderstand und sparen damit Treibstoff ein. All diese Ausführungsformen dienen zum einen für einen weiteren Auftrieb, welche eine jede Tragfläche auszeichnet, und zum anderen zur Stabilisierung des Tragschraubers während des Fluges.

Wenn das Leitwerk mittels zweier in Längsrichtung verlaufender Streben an jeweils einer Tragfläche mit dem Rumpf verbunden ist, bringt das weitere Vorteile mit sich. Dabei sind die Streben vorzugsweise in einem Bereich in der Mitte der Tragflächen angebracht. Das Leitwerk wird damit stabiler an dem Rumpf befestigt und kann damit größer dimensioniert werden, um die stabilisierende und steuernde Wirkung des Leitwerks zu erhöhen.

Ein weiterer Vorteil ist es, wenn das Leitwerk mittels zweier Streben mit dem Rumpf verbunden ist. Zwei Streben erhöhen die Belastbarkeit des Leitwerkes. Ebenso ist eine Verbindung der Streben unmittelbar an dem Rumpf besonders einfach durchzuführen und zu konstruierten, da keine Zwischenelemente benötigt werden.

Außerdem ist es von Vorteil, wenn das Leitwerk drei Leitwerksabschnitte aufweist. Zumindest einer dieser Leitwerksabschnitte ist als Seitenleitwerk ausgebildet. Die drei vorzugsweise senkrechten Abschnitte sind vorteilhafterweise in Tragschrauberquerrichtung voneinander beabstandet. Vorzugsweise ist der mittlere Leitwerksabschnitt als Seitenleitwerk ausgebildet. Zusätzlich oder alternativ können auch die beiden äußeren Leitwerksabschnitte als Seitenleitwerk ausgebildet sein. Durch die drei Leitwerksabschnitte ist der Tragschrauber des Weiteren stabil gegen eine Drehung um eine Hochachse.

Ebenso ist es von Vorteil, wenn die Leitwerksabschnitte nach unten verjüngend ausgebildet sind. Dies spart Material ein, und somit Kosten und Gewicht des Tragschraubers. Ebenso werden die aerodynamischen Eigenschaften, z.B. Luftwiderstand, der Leitwerksabschnitte verbessert.

Eine weitere vorteilhaftige Weiterentwicklung ist es, wenn das Leitwerk an seiner Oberseite einen in Tragschrauberquerrichtung angeordnete Trägerabschnitt aufweist und/oder an diesem Trägerabschnitt die Leitwerksabschnitte nach unten gerichtet angeordnet sind, so dass jeweils zwei nebeneinanderliegende Leitwerksabschnitte und ein Teil des Trägerabschnitts eine nach unten gerichtete U-Form bilden. Bei drei Leitwerksabschnitten bilden sich somit zwei in Tragschrauberquerrichtung nebeneinanderliegende nach unten gerichtete U-Formen aus. Diese stabilisieren den Tragschrauber gegen eine Drehung um eine Tragschrauberhochachse und eine Tragschrauberquerachse.

Vorteilhaft ist es, wenn der Trägerabschnitt und die beiden äußeren Leitwerksabschnitte eine Einheit bilden, die mit dem mittleren Leitwerksabschnitt verbunden ist.

Vorzugsweise ist der mittlere Leitwerksabschnitt als Seitenruder ausgebildet. Ebenso denkbar wäre jedoch, dass die beiden äußeren Leitwerksabschnitte als Seitenruder ausgebildet sind. Dadurch erhöht sich die steuernde Wirkung des Leitwerks.

Vorgeschlagen wird des Weiteren ein Tragschrauber mit einem Rumpf. Vorzugsweise ist ein Teil des Rumpfes als Personenkabine ausgebildet. Der Rumpf kann aber auch alle für den Betrieb des Tragschraubers benötigten weiteren Komponenten, wie z.B. Treibstofftank, Instrumente und Antriebsmotor beinhaltet. In einem oberen Bereich des Rumpfes ist ein Mast angeordnet, welcher im Bereich seines Endes einen drehbar angeordneten Rotor aufweist. Der Rotor ist durch eine Luftströmung in Autorotation versetzbar, sodass ein Auftrieb des Tragschraubers erzeugt wird. Zusätzlich kann der Rotor durch einen Prerotator antreibbar sein, welcher den Rotor zum Starten, insbesondere wenn der Tragschrauber noch keine Fahrt aufweist, in Rotation versetzt. Dadurch wird bereits zum Starten ein Auftrieb erzeugt, und die Zeit bis der Tragschrauber vom Boden abhebt, wird verkürzt. Mittels des Mastes wird die durch den Rotor erzeugte Auftriebskraft auf den Rumpf übertragen. Die Luftströmung entsteht im Allgemeinen durch eine relative Geschwindigkeit des Tragschraubers gegenüber der umgebenden Luft, ist also im Wesentlichen durch einen Fahrtwind gegeben und strömt somit aus Richtung der Flugrichtung an den Tragschrauber. In einem hinteren Bereich des Rumpfes ist ein antreibbarer Propeller angeordnet. Dieser wird insbesondere durch einen Verbrennungsmotor angetrieben und erzeugt einen Vortrieb des Tragschraubers. Teilweise hinter dem Propeller ist ein Leitwerk angeordnet. Vorzugsweise umfasst das Leitwerk ein Seiten- und/oder Höhenruder mit denen der Tragschrauber steuerbar ist. Das Leitwerk ist mittels zumindest einer Strebe, die sich vom Propeller radial nach außen beabstandet an diesem in Tragschrauberlängsrichtung vorbeierstreckt, mit dem Rumpf verbunden. Die Strebe bildet einen primären Lastpfad aus, welcher das Gewicht und die Luftlasten des Leitwerks über die zumindest eine Strebe an den Rumpf weiterleitet. Die Strebe erstreckt sich somit in einer Rückansicht des Tragschraubers an der kreisrunden Propellerbewegungsfläche radial beabstandet an dem Propeller vorbei. Durch die mittelbare Verbindung des Leitwerks mit dem Rumpf mittels der zumindest einen Strebe, können das Leitwerk und der Propeller gegenseitig von Schwingungen entkoppelt werden. Schwingungsentkoppelt bedeutet demnach hier, dass keine Schwingungen vom Leitwerk, die durch Luftströmungen entstehen können, auf den Propeller, insbesondere die Motorwelle, übertragen werden können. Ebenso wird verhindert, dass Schwingungen, die der Propeller und/oder dessen Antriebsmotor erzeugen, insbesondere von der Motorwelle, auf das Leitwerk übertragen werden. Die Motorwelle kann vorzugsweise als Voll- oder Hohlwelle ausgebildet sein.

Erfindungsgemäß ist der Mast derart ausgebildet, insbesondere gegenüber dem Propeller angeordnet und/oder geneigt, dass die Propellerblätter des Propellers in einer Rückansicht des Tragschraubers bei Rotation stets nur teilweise in einem jeweiligen Überlappungsbereich mit dem Mast überlappen. Dadurch liegt das Propellerblatt zu keinem Zeitpunkt vollständig in einem Windschatten des Mastes.

Die aus der Fluggeschwindigkeit und dem Vortrieb resultierende Anströmung des Propellers bewirkt eine in Flugrichtung gerichtete Kraft an den Propellerblättern. Verschwindet ein Propellerblatt hinter dem Mast bzw. taucht in den Windschatten des Mastes ein, bewirkt der Windschatten oder Nachlauf des Mastes eine Änderung der resultierenden Anströmung, was eine schlagartige Laständerung zur Folge hat. Das zumindest eine andere Propellerblatt befindet sich jedoch zu diesem Zeitpunkt nicht im Windschatten oder Nachlauf des Mastes und erfährt eine quasi ungestörte Anströmung die folglich eine gleichmäßige Kraft am Propellerblatt bewirkt. Die an den Propellerblättern unterschiedlich oszillierende Kraft führt zu schwingenden Belastungen und einem schnelleren Verschleiß. Auf der anderen Seite erzeugen die oszillierenden Kräfte an den Propellerblättern auch Vibrationen, die sich ebenfalls auf den Rumpf ausbreiten, dort zu Materialermüdung der Bauteile führen und für die Personen im Tragschrauber unangenehm sein können.

Dadurch, dass die Propellerblätter zu keinem Zeitpunkt komplett im Windschatten oder Nachlauf des Mastes liegen, sondern immer zumindest über einen wesentlichen Bereich ungestört angeströmt werden, wird die oszillierende Kraft abgemildert, was zu einer geringeren Materialermüdung der Bauteile und zu einer Verringerung der Vibrationen führt.

Ein Vorteil ist es, wenn der Mast mehrteilig ausgebildet ist. So kann der Mast z.B. zweiteilig, mit zwei, insbesondere parallelen, Seitenteilen, die vorzugsweise in Tragschrauberquerrichtung voneinander beabstandet sind, ausgebildet sein. Die Seitenteile sind an einem Ende mit dem Rumpf verbunden. An dem zum Rumpf entgegengesetzten Ende der Seitenteile ist vorzugsweise ein Dachteil angeordnet, welches die Seitenteile verbindet und den Rotor drehbar aufnimmt. Alternativ können die Seitenteile auch in Richtung der Tragschraubermitte geneigt sein, so dass sie in Richtung des Rotors zueinander hinlaufen und/oder das Dachteil eine geringere Ausdehnung aufweist. Ebenfalls können die Seitenteile derart geneigt sein, dass diese an ihrem zum Rumpf abgewandten Ende zusammenlaufen. Dadurch kann auf das Dachteil verzichtet werden. Dabei müssen die Seitenteile nicht in Tragschrauberquerrichtung geneigt sein. Denkbar ist auch, dass die Seitenteile in Tragschrauberlängsrichtung beabstandet sind. Zusätzlich ist auch eine Kombination aus Seitenteilen möglich, die in Tragschrauberquerrichtung und/oder -längsrichtung beabstandet sind. Ein mehrteiliger Mast weist dabei eine höhere Stabilität auf.

Ferner ist es von Vorteil, wenn der Mast gebogen, insbesondere in Tragschrauberquerrichtung konkav und/oder konvex, ausgebildet ist. Zusätzlich oder alternativ kann der Mast auch einen Knick nach außen aufweisen. Durch eine z.B. konkave Form des Mastes und einen geraden Propellerflügel ist auf einfache Weise der Überlappungsbereich ausgebildet. Dies führt, wie oben beschrieben, zu einer Verringerung der Vibrationen, zu einer Verringerung des Verschleißes der Bauteile und zu geringeren Geräuschentwicklungen.

Weitere Vorteile der Erfindung sind in den nachfolgenden Ausführungsbeispielen beschrieben. Es zeigt
- **Figur 1**: eine Seitenansicht eines Tragschraubers mit einem Leitwerksfortsatz, der einen Teil einer stromlinienförmiger Außenkontur des Tragschraubers bildet,
- **Figur 2**: einen Ausschnitt des Tragschraubers im hinteren Bereich des Rumpfes gemäß einem alternativen Ausführungsbeispiel der stromlinienförmigen Außenkontur mit einem zusätzlichen Propellerfortsatz,
- **Figur 3**: einen Ausschnitt des Tragschraubers im hinteren Bereich des Rumpfes gemäß einem alternativen Ausführungsbeispiel der stromlinienförmigen Außenkontur mit einem Umlaufpropeller,
- **Figur 4**: eine Rückansicht des Tragschraubers ohne Leitwerk mit einem geteilten Mast, und
- **Figur 5**: eine Rückansicht des Tragschraubers mit Leitwerk, das drei Leitwerksabschnitte aufweist, und einem alternativ geformten Rumpf.

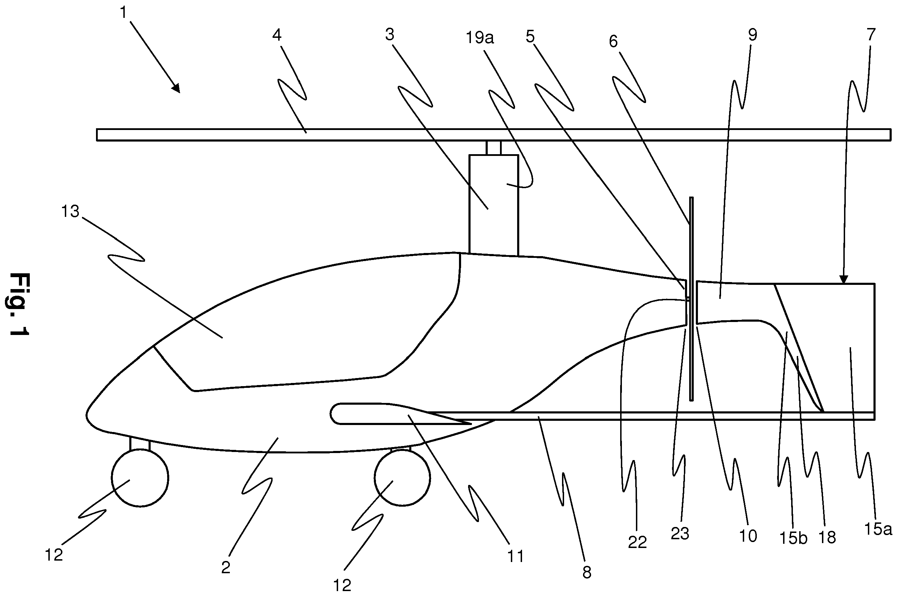

In Figur 1 ist eine Seitenansicht eines Tragschraubers 1 mit einer stromlinienförmiger Außenkontur gezeigt. Den Grundkörper des Tragschraubers 1 bildet ein Rumpf 2. Der Rumpf 2 weist an seiner Unterseite Räder 12 auf. In einem vorderen Bereich des Rumpfes 2 ist eine Personenkabine 13 angeordnet. In einem Bereich an der Oberseite des Rumpfes 2 ist ein Mast 3 angeordnet. An einem oberen Ende des Mastes 3 ist ein Rotor 4 drehbar angeordnet. Der Rotor 4 wird durch eine von vorne kommende Luftströmung in Autorotation versetzt und erzeugt so einen Auftrieb des Tragschraubers 1. Der Mast 3 überträgt die Auftriebskraft vom Rotor 4 auf den Rumpf 2.

Der Rumpf 2 weist ein hinteres Rumpfende 5 auf. Am hinteren Rumpfende 5 ist ein Propeller 6 angeordnet, mittels dem ein Vortrieb des Tragschraubers 1 erzeugbar ist. Der Propeller 6 ist drehfest mit einer sich am Rumpfende 5 aus dem Rumpf 2 hinauserstreckenden Antriebswelle 22 verbunden. Ein Leitwerk 7 ist in Tragschrauberlängsrichtung teilweise hinter dem Propeller 6 angeordnet. In diesem Ausführungsbeispiel ist das Leitwerk 7 mittels zweier Streben 8 an den Tragflächen 11 mittelbar mit dem Rumpf 2 verbunden. Die Tragfläche 11 und die Strebe 8 treten dabei symmetrisch zur Längsachse des Tragschraubers 1 auf, d.h. der Tragschrauber 1 weist auf seiner linken und rechten Seite eine Tragfläche 11 sowie eine Strebe 8 auf. Eine weitere Ausführungsform um das Leitwerk 7 mit dem Rumpf 2 zu verbinden ist, nur eine Strebe 8 zu benutzen, die das Leitwerk 7 mittig in Längsrichtung unter dem Propeller 6 hindurch mit dem Rumpf 2 verbindet.

Das Leitwerk 7 weist einen koaxial zum hinteren Rumpfende 5 nach vorne gerichteten Leitwerksfortsatz 9 auf. Dieser ist mit dem Leitwerk 7 verbunden und geht fließend vorzugsweise in ein Seitenleitwerk 18 des Leitwerks 7 über. Das Seitenleitwerk 18 ist mittig zur Querachse des Tragschraubers 1 angeordnet. Des Weiteren ist das Seitenleitwerk 18 nach unten gerichtet. Der Leitwerksfortsatz 9 bildet zumindest mit dem Bereich des hinteren Rumpfendes 5 eine stromlinienförmige Außenkontur. Eine Luftströmung um diese stromlinienförmige Außenkontur bildet eine anliegende Strömung aus. Eine derartige stromlinienförmige Außenkontur des Tragschraubers 1 verringert somit eine Ablösung der Luftströmung von der stromlinienförmigen Außenkontur, verringert den Treibstoffverbrauch und führt zu einem stabileren Flugverhalten.

Ein Spalt 10 trennt das hintere Rumpfende 5 mit dem dort angeordneten Propeller 6 von dem Leitwerksfortsatz 9 und somit von dem Leitwerk 7. Durch den Spalt 10 wird eine Übertragung von Schwingungen, erzeugt von dem Propeller 6, auf das Leitwerk 7 verhindert. Ebenso wird eine Übertragung von Schwingungen vom Leitwerk 7 auf den Rumpf 2 verhindert. Hierdurch wird die Flugleistung verbessert und das Flugverhalten durch die verringerten Schwingungen ruhiger.

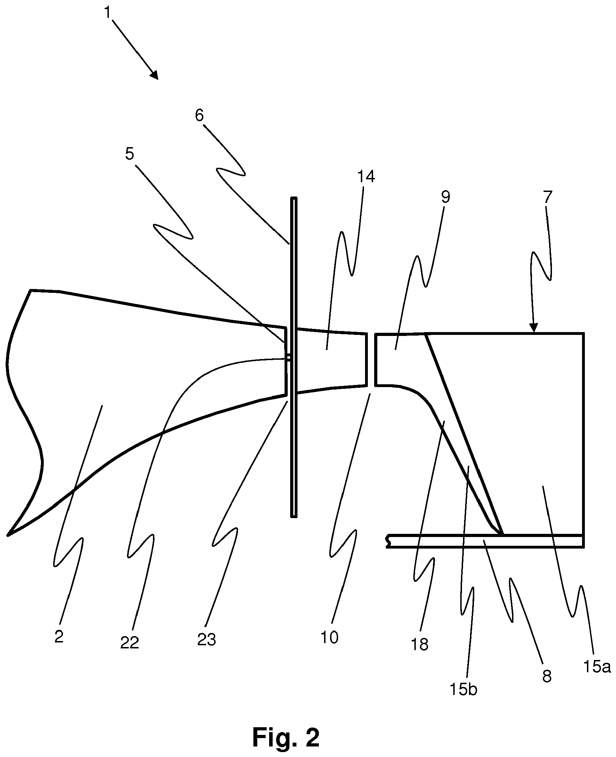

In einem hier nicht dargestellten Ausführungsbeispiel kann der Tragschrauber ein Dämpfungselement aufweisen. Das Dämpfungselement umfasst ein schwingungsentkoppeltes Lager, z.B. ein Elastomerlager, wodurch das Dämpfungselement keine oder nur sehr wenige Schwingungen weiterleitet. Das Dämpfungselement erstreckt sich vorzugsweise in einem Teilbereich des Spaltes 10 - d.h. nicht über das gesamte durch den Spalt 10 gebildete Freiraumvolumen - aber über die gesamte Länge des Spaltes 10. Hierdurch kann trotz der durch den Spalt 10 bewirkten Schwingungsentkopplung eine gewisse gleichbleibende Beabstandung des Leitwerks 7 sichergestellt werden. Das Dämpfungselement verbindet somit den Leitwerksfortsatz 9 schwingungsdämpfend und/oder abstandserhaltend mit dem Rumpf 2 und/oder gemäß dem in Figur 2 nachfolgend beschriebenen Ausführungsbeispiel mit einem Propellerfortsatz 14.

In Figur 2 ist ein Ausschnitt des Tragschraubers im hinteren Bereich des Rumpfes gemäß einem alternativen Ausführungsbeispiel der stromlinienförmigen Außenkontur mit einem zusätzlichen Propellerfortsatz 14, gezeigt. Hierin ist der Propeller 6 am hinteren Rumpfende 5 angeordnet. Der Propellerfortsatz 14 ist mit dem Propeller 6 drehfest verbunden, sodass der Propellerfortsatz 14 bei einer Rotation des Propellers 6 mitrotiert. Die Form des Propellerfortsatzes 14 ist an die des Rumpfes 2 im Bereich des hinteren Rumpfendes 5 stromlinienförmig angepasst. Ebenso ist die Form des Propellerfortsatzes 14 an diejenige des Leitwerksfortsatzes 9 stromlinienförmig angepasst. Der Propellerfortsatz 14 bildet somit einen Teil der stromlinienförmigen Außenkontur. Gleiches trifft auf den Leitwerksfortsatz 9 und/oder das Seitenleitwerk 18 zu. Durch die stromlinienförmige Außenkontur fließt eine im Wesentlichen anliegende Luftströmung zumindest vom Bereich des hinteren Rumpfendes 5, über den Propellerfortsatz 14 zum Leitwerksfortsatz 9 und wird zum Seitenleitwerk 18 weitergeleitet. Eine derartige anliegende Luftströmung führt zu einem geringeren Treibstoffverbrauch, einem stabileren Flugverhalten und einer geringen Geräuschentwicklungen.

Der Spalt 10 ist in diesem Ausführungsbeispiel zwischen dem Propellerfortsatz 14 und dem Leitwerksfortsatz 9 angeordnet. Das Leitwerk 7 ist somit von dem Propeller 6 schwingungsentkoppelt.

Damit sich der Propeller 6 zusammen mit dem Propellerfortsatz 14 gegenüber dem Rumpf 2 drehen kann, ist in Tragschrauberlängsrichtung zwischen dem hinteren Rumpfende 5 und dem Propellerfortsatz 14 ein zweiter Spalt 23 ausgebildet.

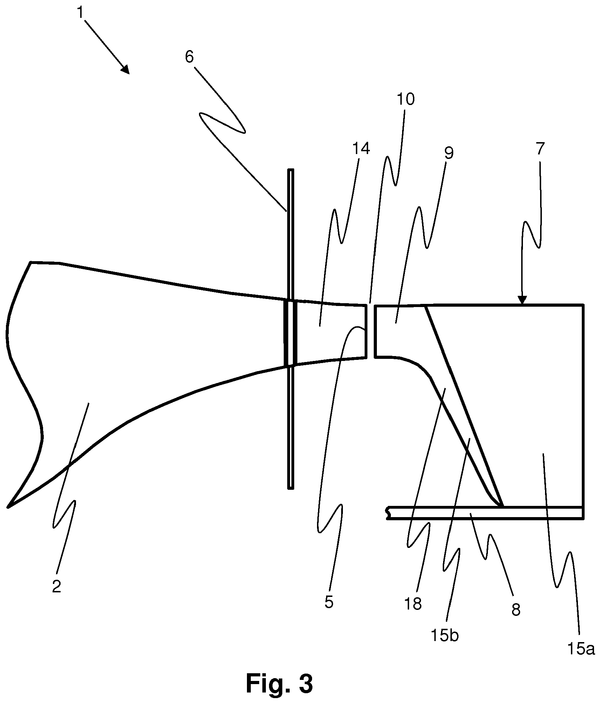

In Figur 3 ist ein Ausschnitt des Tragschraubers im hinteren Bereich des Rumpfes gemäß einem alternativen Ausführungsbeispiel der stromlinienförmigen Außenkontur mit einem Umlaufpropeller, gezeigt. Der Propeller 6 ist in diesem Ausführungsbeispiel als Umlaufpropeller 6 ausgebildet. Der Propeller 6 ist somit vom Rumpfende 5 in Richtung des Rumpfes 2 beabstandet angeordnet und kann um den hinteren Bereich des Rumpfes 2 rotieren.

Hinter dem Umlaufpropeller 6 ist der Propellerfortsatz 14 angeordnet, welcher als Teil des Rumpfes 2 ausgebildet ist. Der Propellerfortsatz 14 rotiert demnach nicht mit dem Propeller 6 mit. Der Propellerfortsatz 14 bildet mit dem Rumpf 2 einen Teil der stromlinienförmigen Außenkontur. Ebenso bildet der Propellerfortsatz 14 mit dem Leitwerksfortsatz 9 und dem Seitenleitwerk 18 einen Teil der stromlinienförmigen Außenkontur. Durch die stromlinienförmige Außenkontur fließt eine im Wesentlichen anliegende Luftströmung zumindest vom Bereich des hinteren Rumpfendes 5, über den Propellerfortsatz 14 zum Leitwerksfortsatz 9 und von dort aus zum Seitenleitwerk 18. Eine derartige Luftströmung führt zu einem geringeren Treibstoffverbrauch, stabileren Flugverhalten und geringen Geräuschentwicklungen.

Der Spalt 10 ist in diesem Ausführungsbeispiel zwischen dem Propellerfortsatz 14 und dem Leitwerksfortsatz 9 angeordnet und entkoppelt mechanisch das Leitwerk 7 von dem Propeller 6 von Schwingungen.

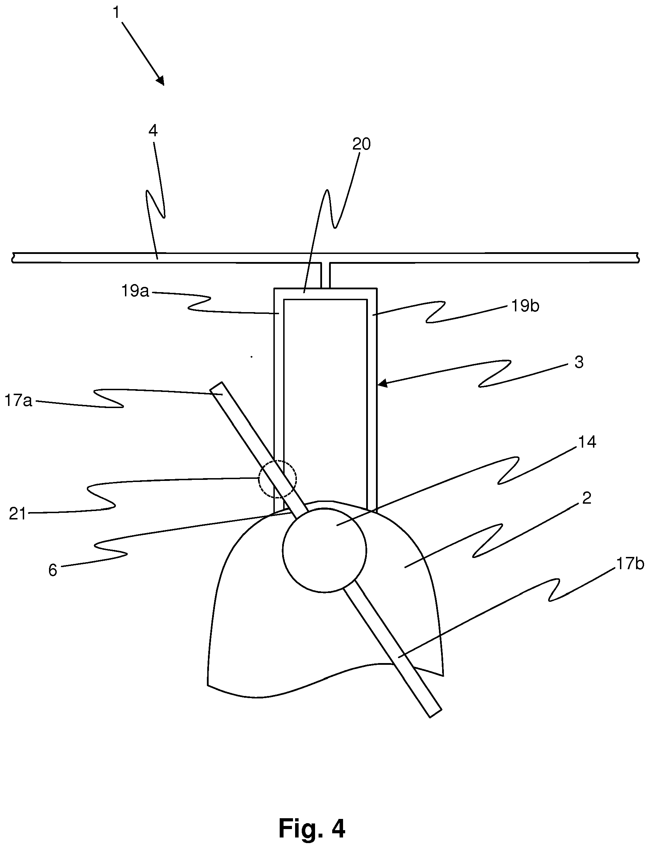

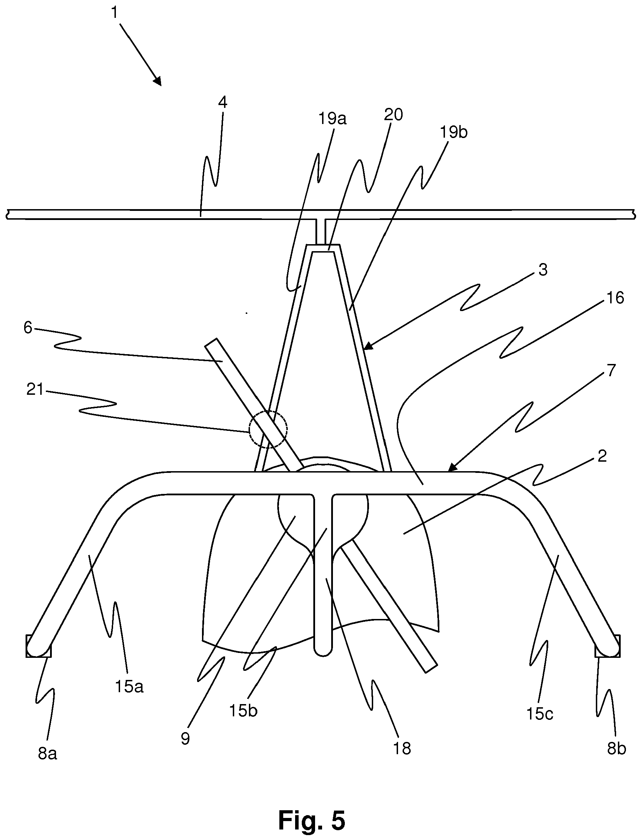

In Figur 4 ist eine Rückansicht des Tragschraubers ohne Leitwerk mit einem geteilten Mast gezeigt. In diesem Ausführungsbeispiel ist der Mast 3 geteilt ausgebildet. Der Mast 3 weist zwei Seitenteile 19a, 19b auf, die in Tragschrauberquerrichtung voneinander beabstandet sind. An deren dem Rumpf 2 abgewandten Enden ist ein Dachteil 20 angeordnet, das mit den Seitenteilen 19a, 19b verbunden ist. In dem Dachteil 20 ist der Rotor 4 drehbar gelagert. In diesem Ausführungsbeispiel sind die Seitenteile 19a, 19b senkrecht und/oder zueinander parallel angeordnet. Alternativ können die Seitenteile 19a, 19b gemäß dem in Figur 5 dargestellten Ausführungsbeispiel aber auch einander zugeneigt sein, sodass das Dachteil 20 in Tragschrauberquerrichtung verkürzt ist. Alternativ können die Seitenteile 19a, 19b derart einander zugeneigt sein, dass sie oben zusammenlaufen, wodurch auf ein Dachteil 20 verzichtet werden kann. In einem weiteren, nicht gezeigten Ausführungsbeispiel, können die Seitenteile 19a, 19b auseinandergeneigt sein. Zusätzlich oder alternativ ist es vorteilhaft, wenn die Seitenteile 19a, 19b und/oder das Dachteil 20 gebogen, konkav und/oder konvex ausgebildet sind.

Durch die Teilung des Mastes 3 ist, wie in dem in Figur 4 dargestellten Ausführungsbeispiel gezeigt, ein Propellerblatt 17a zu keinem Zeitpunkt vollständig hinter dem Mast 3. Es wird ein Überlappungsbereich 21 ausgebildet, indem das Propellerblatt 17a in der Rückansicht mit dem Seitenteil 19a des Mastes 3 überlappt. Das Propellerblatt 17b liegt dem Propellerblatt 17a gegenüber. Alternativ kann der Propeller 6 auch mehr als zwei Propellerblätter 17 aufweisen. Der Propeller 6 kann z.B. als 3-Blatt-, 4-Blatt- oder 5-Blattpropeller ausgebildet sein.

Die aus der Fluggeschwindigkeit und dem Vortrieb resultierende Anströmung des Propellers 6 bewirkt eine in Flugrichtung gerichtete Kraft an den Propellerblättern 17a, 17b. Verschwindet ein Propellerblatt 17 hinter dem Mast 3 bzw. taucht in den Windschatten des Mastes 3 ein, bewirkt der Windschatten des Mastes 3 eine Änderung der resultierenden Anströmung, was eine schlagartige Laständerung zur Folge hat. Das zumindest eine andere Propellerblatt 17 befindet sich jedoch zu diesem Zeitpunkt nicht im Windschatten des Mastes 3 und erfährt eine quasi ungestörte Anströmung, die folglich eine gleichmäßige Kraft am Propellerblatt 17 bewirkt. Die an den Propellerblättern 17a, 17b unterschiedlich oszillierende Kraft führt zu schwingenden Belastungen und einem schnelleren Verschleiß. Auf der anderen Seite erzeugen die oszillierenden Kräfte an den Propellerblättern 17a, 17b auch Vibrationen, die sich ebenfalls auf den Rumpf 2 ausbreiten und dort zu Materialermüdung der Bauteile führen und für die Personen im Tragschrauber 1 unangenehm sein können. Dadurch, dass die Propellerblätter 17a, 17b zu keinem Zeitpunkt komplett im Windschatten des Mastes 3 liegen, sondern immer zumindest über einen wesentlichen Bereich ungestört angeströmt werden, wird die oszillierende Kraft abgemildert, was zu einer geringeren Materialermüdung der Bauteile und zu einer Verringerung der Vibrationen führt.

In Figur 5 ist eine Rückansicht des Tragschraubers 1 mit dem Leitwerk 7 gezeigt. Der Mast 3 ist zweiteilig ausgebildet. In diesem Ausführungsbeispiel umfasst der Mast 3 die beiden Seitenteile 19a, 19b, welche zu der Mitte des Tragschraubers 1 einander zugeneigt sind. Die beiden Seitenteile 19a, 19b sind an ihren Enden mit dem Dachteil 20 verbunden. Das Dachteil nimmt den Rotor 4 drehbar auf. Die beiden Seitenteile 19a, 19b sind gegenüber der Tragschrauberachse geneigt.

Das Leitwerk 7 weist an der Oberseite einen sich in Tragschrauberquerrichtung erstreckenden Trägerabschnitt 16 auf. In einem hier nicht dargestellten Ausführungsbeispiel kann ein Teil dieses Trägerabschnitts 16 als Höhenleitwerk ausgebildet sein.

An diesem Trägerabschnitt 16 sind drei nach unten gerichtete Leitwerksabschnitte 15a, 15b, 15c angeordnet. Diese wirken stabilisierend gegen eine Drehung des Tragschraubers 1 um seine Hochachse. In dem dargestellten Ausführungsbeispiel ist der mittlere Leitwerksabschnitte 15b als Seitenleitwerk 18 ausgebildet. Das Seitenleitwerk 18 ist mittig zur Querrichtung des Tragschraubers 1 angeordnet. Mittels des Seitenruders 15b ist der Tragschrauber 1 steuerbar.

In einem alternativen Ausführungsbeispiel können auch die beiden äußeren Leitwerksabschnitte 15a, 15c als Seitenruder ausgebildet sein. Die Leitwerksabschnitte können zueinander parallel ausgerichtet sein. Ebenfalls können die beiden äußeren Leitwerksabschnitte 15a, 15c gemäß Figur 5 nach Innen geneigt sein. Alternativ können die Leitwerksabschnitte 15a, 15c nach Außen geneigt sein. Die beiden äußeren Leitwerksabschnitte 15a, 15c bilden mit dem Trägerabschnitt 16 eine nach unten U-förmig geöffnete Einheit. Diese ist entweder mit dem mittleren Leitwerksabschnitt 15b und/oder dem Leitwerksfortsatz 9 einteilig oder mehrteilig ausgebildet.

An das Seitenleitwerk 18 schließt nach vorne der Leitwerksfortsatz 9 an. Dabei ist der Übergang von Seitenleitwerk 18 zum Leitwerksfortsatz fließend, sodass eine stromlinienförmige Außenkontur ausgebildet ist. Eine Luftströmung um eine derartige stromlinienförmige Außenkontur bildet eine im Wesentlichen anliegende Strömung aus, wodurch Treibstoff eingespart, das Flugverhalten verbessert und die Geräuschentwicklung verringert wird.

Ebenso bilden jeweils zwei der Leitwerksabschnitte 15a, 15b, 15c mit dem Trägerabschnitt 16 eine nach unten gerichtete U-Form aus. So bilden die Leitwerksabschnitte 15a, 15b mit einem Teil des Trägerabschnitts 16 eine erste nach unten gerichtete U-Form. Die Leitwerksabschnitte 15b, 15c bilden zusammen mit einem Teil des Trägerabschnitts 16 eine zweite nach unten gerichtete U-Form.

An den beiden äußeren Leitwerksabschnitten 15a, 15c ist in diesem Ausführungsbeispiel jeweils eine der Streben 8a, 8b angebracht. Die beiden Streben 8a, 8b verlaufen nach vorne und können mit hier nicht gezeigten Tragflächen (vgl. Figur 1) oder unmittelbar mit dem Rumpf 2 verbunden sein.

Alternativ kann der Tragschrauber 1 auch eine einzige Strebe 8 aufweisen. Die Strebe 8 verbindet dann über den mittleren Leitwerksabschnitt 15b das Leitwerk 7 mit dem Rumpf 2. Vorzugsweise verläuft dabei die Strebe 8 unter dem Propeller 6 hindurch vom Leitwerksabschnitt 15b zum Rumpf 2.

### Bezugszeichenliste

1. Tragschrauber
2. Rumpf
3. Mast
4. Rotor
5. hinteres Rumpfende
6. Propeller
7. Leitwerk
8. Strebe
9. Leitwerksfortsatz
10. erster Spalt
11. Tragfläche
12. Rad
13. Personenkabine
14. Propellerfortsatz
15. Leitwerksabschnitt
16. Trägerabschnitt
17. Propellerblatt
18. Seitenruderleitwerk
19. Seitenteil
20. Dachteil
21. Überlappungsbereich
22. Antriebswelle
23. zweiter Spalt

## Patentansprüche

1. Tragschrauber mit einem Rumpf (2), mit einem im oberen Bereich des Rumpfes (2) angeordneten Mast (3), mit einem Rotor (4), der im Bereich des Endes des Mastes (3) drehbar angeordnet und durch eine Luftströmung in Autorotation versetzbar ist, mit einem im Bereich eines hinteren Rumpfendes (5) angeordneten und antreibbaren Propeller (6), der einen Vortrieb des Tragschraubers (1) hervorruft, mit einem hinter dem Propeller (1) angeordneten Leitwerk (7) und mit zumindest einer Strebe (8), die sich vom Propeller (6) radial nach außen beabstandet an diesem in Tragschrauberlängsrichtung vorbeierstreckt und das Leitwerk (7) mit dem Rumpf (2) verbindet, **dadurch gekennzeichnet, dass** das Leitwerk (7) einen koaxial zum hinteren Rumpfende (5) angeordneten Leitwerksfortsatz (9) aufweist, der sich vom Leitwerk (7) ausgehend nach vorne in Richtung des hinteren Rumpfendes (5) erstreckt und der vom hinteren Rumpfende (5) derart beabstandet ist, dass im Bereich zwischen diesen beiden ein Spalt (10) ausgebildet ist, und dass der Rumpf (2) zumindest im Bereich seines hinteren Rumpfendes (5) und der Leitwerksfortsatz (9) zusammen eine stromlinienförmige Außenkontur ausbilden.

2. Tragschrauber nach dem vorherigen Anspruch, **dadurch gekennzeichnet, dass** im Bereich hinter dem Propeller (6) ein Propellerfortsatz (14) angeordnet ist, der sich vorzugsweise koaxial nach hinten in Richtung des Leitwerksfortsatzes (9) erstreckt und/oder von diesem beabstandet ist, und/oder dass der Propellerfortsatz (14), insbesondere zusammen mit dem Rumpf (2) zumindest im Bereich seines hinteren Rumpfendes (5) und dem Leitwerksfortsatz (9), ein Teil der stromlinienförmigen Außenkontur ausbildet.

3. Tragschrauber nach dem vorherigen Anspruch 2, **dadurch gekennzeichnet, dass** der Propeller (6) als Umlaufpropeller ausgebildet ist, wobei vorzugsweise der Propellerfortsatz (14) als Teil des Rumpfes (2) ausgebildet ist, steif mit dem Rumpf (2) verbunden ist und/oder das Ende des Propellerfortsatzes (14) das hintere Rumpfende bildet.

4. Tragschrauber nach einem oder mehreren der vorherigen Ansprüche, **dadurch gekennzeichnet, dass** der Propeller (6) drehbar am hinteren Rumpfende (5), insbesondere auf einer über das hintere Rumpfende (5) hinausragenden Motorwelle, angeordnet ist.

5. Tragschrauber nach einem oder mehreren der vorherigen Ansprüche 2 oder 3, **dadurch gekennzeichnet, dass** der Propellerfortsatz (14) als Teil des Propellers (6) ausgebildet ist und/oder mit diesem drehfest verbunden ist, sodass der Propellerfortsatz (14) mit dem Propeller (6) mitrotierbar ist.

6. Tragschrauber nach einem oder mehreren der vorherigen Ansprüche 2, 3, oder 5, **dadurch gekennzeichnet, dass** sich der Spalt (10) vom Leitwerksfortsatz (9), insbesondere von dessen in Flugrichtung zeigenden Ende, ausgehend bis zum Propellerfortsatz (14), insbesondere bis zu dessen entgegen die Flugrichtung zeigenden Ende, erstreckt.

7. Tragschrauber nach einem oder mehreren der vorherigen Ansprüche 2, 3, 5 oder 6, **dadurch gekennzeichnet, dass** der Tragschrauber ein Dämpfungselement aufweist, das sich vorzugsweise in einem Teilbereich des Spaltes (10) über die gesamte Länge des Spaltes (10) erstreckt und/oder den Leitwerksfortsatz (9) auf Abstand haltend mit dem Rumpf (2) und/oder dem Propellerfortsatz (14) verbindet.

8. Tragschrauber nach dem vorherigen Anspruch 7, **dadurch gekennzeichnet, dass** das Dämpfungselement an seinem einen Ende drehfest mit dem Leitwerksfortsatz (9) und/oder an seinem anderen Ende drehfest oder drehbar gelagert mit dem Propellerfortsatz (14) verbunden ist.

9. Tragschrauber nach einem oder mehreren der vorherigen Ansprüche, **dadurch gekennzeichnet, dass** seitlich an dem Rumpf (2) jeweils zumindest eine Tragfläche (11) angeordnet ist und/oder dass das Leitwerk (7) mittels zweier in Querrichtung voneinander beabstandeter Streben (8), insbesondere an jeweils einer Tragfläche (11), mit dem Rumpf (2) verbunden ist.

10. Tragschrauber nach einem oder mehreren der vorherigen Ansprüche, **dadurch gekennzeichnet, dass** das Leitwerk (7) ein Seitenleitwerk (18) umfasst, das koaxial zum Leitwerksfortsatz (9) angeordnet ist, einteilig mit diesem ausgebildet ist und/oder einen Teil der stromlinienförmigen Außenkontur ausbildet.

11. Tragschrauber nach einem oder mehreren der vorherigen Ansprüche, **dadurch gekennzeichnet, dass** das Leitwerk (7) drei Leitwerksabschnitte (15a, 15b, 15c) aufweist, wobei zumindest ein Leitwerksabschnitte (15b) als das Seitenleitwerk (18) mit Seitenruder ausgebildet ist und die drei Leitwerksabschnitte (15a, 15b, 15c) in Tragschrauberquerrichtung beabstandet sind.

12. Tragschrauber nach einem oder mehreren der vorherigen Ansprüche, **dadurch gekennzeichnet, dass** das Leitwerk (7) eine in Tragschrauberquerrichtung angeordnete Trägerfläche (16) aufweist und/oder an dieser Trägerfläche (16) die Leitwerksabschnitte (15) nach unten gerichtet angeordnet sind, sodass jeweils zwei nebeneinanderliegende Leitwerksabschnitte (15) und die Trägerfläche (16) eine nach unten gerichtete U-Form ausbilden.

## Claims

1. Gyroplane with a fuselage (2), with a mast (3) arranged in the upper area of the fuselage (2), with a rotor (4), which is arranged in a rotatable manner in the area of the end of the mast (3) and can be set in autorotation by an air flow, with a propeller (6) that is arranged and drivable in the rear area of the fuselage end (5), which produces the propulsion of the gyroplane (1), with a empennage (7) arranged behind the propeller (1) and with at least one strut (8), which extends from the propeller (6), spaced from it in a radially outward direction, in the longitudinal direction of the gyroplane and connects the empennage (7) to the fuselage (2), **characterized in that** the empennage (7) features a empennage extension (9) arranged in a coaxial manner with respect to the rear fuselage end (5), which extends from the empennage (7) forwards in the direction of the rear fuselage end (5), and which is spaced from the rear fuselage end (5) in such a manner that a gap (10) is formed in the area between such two pieces, and that the fuselage (2), at least in the area of its rear fuselage end (5), and the empennage extension (9) together form a streamlined outer contour.

2. Gyroplane according to the preceding claim, **characterized in that**, in the area behind the propeller (6), a propeller extension (14) is arranged, which preferably extends in a coaxial manner towards the rear in the direction of the empennage extension (9) and/or is spaced from it, and/or that the propeller extension (14), in particular together with the fuselage (2), forms a part of the streamlined outer contour at least in the area of its rear fuselage end (5) and the empennage extension (9).

3. Gyroplane according to the preceding claim 2, **characterized in that** the propeller (6) is formed as a rotary propeller wherein, preferably, the propeller extension (14) is formed as part of the fuselage (2), rigidly connected to the fuselage (2), and/or the end of the propeller extension (14) forms the rear fuselage end.

4. Gyroplane according to one or more of the preceding claims, **characterized in that** the propeller (6) is arranged rotatably on the rear fuselage end (5), in particular on a motor shaft projecting beyond the rear fuselage end (5).

5. Gyroplane according to one or more of the preceding claims 2 or 3, **characterized in that** the propeller extension (14) is formed as a part of the propeller (6) and/or is connected to it in a torque-proof manner, such that the propeller extension (14) is rotatably along with the propeller (6).

6. Gyroplane according to one or more of the preceding claims 2, 3 or 5, **characterized in that** the gap (10) extends from the empennage extension (9), in particular from its end pointing in the direction of flight, to the propeller extension (14), in particular up to its end pointing in the opposite direction of flight.

7. Gyroplane according to one or more of the preceding claims 2, 3, 5 or 6, **characterized in that** the gyroplane features a damping element, which preferably extends in a partial area of the gap (10) over the entire length of the gap (10) and/or connects the empennage extension (9) at a distance to the fuselage (2) and/or the propeller extension (14).

8. Gyroplane according to the preceding claim 7, **characterized in that** the damping element is connected at its one end to the empennage extension (9) in a torque-proof manner, and/or is connected at its other end in a torque-proof or rotatably mounted manner to the propeller extension (14).

9. Gyroplane according to one or more of the preceding claims, **characterized in that** at least one wing (11) is arranged at each side of the fuselage (2), and/or that the empennage (7) is connected to the fuselage (2) in particular at one wing (11) respectively by means of two struts (8) spaced from each other in the transverse direction.

10. Gyroplane according to one or more of the preceding claims, **characterized in that** the empennage (7) comprises a side empennage (18), which is arranged in a coaxial manner with respect to the empennage extension (9), is formed in one piece with it and/or forms a part of the streamlined outer contour.

11. Gyroplane according to one or more of the preceding claims, **characterized in that** the empennage (7) features three empennage sections (15a, 15b, 15c), wherein at least one empennage section (15b) is formed as the side empennage (18) with rudder and the three empennage sections (15a, 15b, 15c) are spaced in the transverse direction of the gyroplane.

12. Gyroplane according to one or more of the preceding claims, **characterized in that** the empennage (7) features a wing (16) arranged in the transverse direction of the gyroplane and/or at such wing (16), the empennage sections (15) are arranged in a manner directed downwards, such that two adjacent empennage sections (15) and the wing (16) form a U-shape that is directed downwards.

## Revendications

1. Autogire avec un fuselage (2), avec un mât (3) disposé dans la zone supérieure du fuselage (2), avec un rotor (4) qui est disposé rotatif dans la zone de l'extrémité du mât (3) et qui peut être mis en autorotation par un courant d'air, avec une hélice (6) entraînable disposée dans la zone d'une extrémité arrière (5) du fuselage, qui produit une propulsion de l'autogire (1), avec un empennage (7) disposé derrière l'hélice (1) et avec au moins une entretoise (8) qui, distante de l'hélice (6) radialement vers l'extérieur, s'étend à côté de cette dernière dans la direction longitudinale de l'autogire et relie l'empennage (7) au fuselage (2), **caractérisé en ce que** l'empennage (7) présente un prolongement (9) d'empennage disposé coaxialement à l'extrémité arrière (5) du fuselage, lequel s'étend vers l'avant à partir de l'empennage (7), dans la direction de l'extrémité arrière (5) du fuselage, et qui est espacé de l'extrémité arrière (5) du fuselage de manière à former une fente (10) entre ces deux, et **en ce que** le fuselage (2), au moins dans la zone de son extrémité arrière (5) du fuselage, et le prolongement d'empennage (9) forment ensemble un contour extérieur aérodynamique.

2. Autogire selon la revendication précédente, **caractérisé en ce qu'**un prolongement d'hélice (14) est disposé dans la zone derrière l'hélice (6), lequel s'étend de préférence coaxialement vers l'arrière, dans la direction du prolongement (9) d'empennage, et/ou est espacé de ce dernier, et/ou en ce que le prolongement d'hélice (14) forme une partie du contour extérieur aérodynamique, en particulier avec le fuselage (2), au moins dans la zone de son extrémité arrière (5) du fuselage, et le prolongement (9) de l'empennage.

3. Autogire selon la revendication précédente 2, **caractérisé en ce que** l'hélice (6) se présente sous la forme d'une hélice périphérique, sachant que le prolongement d'hélice (14) se présentant de préférence sous la forme d'une partie du fuselage (2), étant reliée rigidement au fuselage (2) et/ou l'extrémité du prolongement d'hélice (14) formant l'extrémité arrière du fuselage.

4. Autogire selon l'une ou plusieurs des revendications précédentes, **caractérisé en ce que** l'hélice (6) est disposée de manière rotative à l'extrémité arrière (5) du fuselage, en particulier sur un arbre du moteur faisant saillie sur l'extrémité arrière (5) du fuselage.

5. Autogire selon l'une ou plusieurs des revendications 2 ou 3 précédentes, **caractérisé en ce que** le prolongement d'hélice (14) est formé en tant que partie de l'hélice (6) et/ou relié solidairement en rotation à celle-ci, de sorte que le prolongement d'hélice (14) puisse tourner avec l'hélice (6).

6. Autogire selon l'une ou plusieurs des revendications 2, 3 ou 5 précédentes, **caractérisé en ce que** la fente (10) s'étend à partir du prolongement (9) d'empennage, en particulier de son extrémité dirigée dans la direction de vol, au prolongement d'hélice (14), en particulier jusqu'à son extrémité dirigée dans la direction opposée à la direction de vol.

7. Autogire selon l'une ou plusieurs des revendications 2, 3, 5 ou 6 précédentes, **caractérisé en ce que** l'autogire présente un élément d'amortissement qui s'étend de préférence dans une zone partielle de la fente (10) sur toute la longueur de la fente (10) et/ou relie le prolongement (9) d'empennage, en le maintenant à distance, au fuselage (2) et/ou au prolongement d'hélice (14).

8. Autogire selon la revendication 7 précédente, **caractérisé en ce que** l'élément d'amortissement est relié de manière solidaire en rotation au prolongement (9) d'empennage en l'une de ses extrémités et/ou, en son autre extrémité, monté sur palier solidaire en rotation ou rotatif et relié au prolongement d'hélice (14).

9. Autogire selon l'une ou plusieurs des revendications précédentes, **caractérisé en ce qu'**au moins une aile (11) est respectivement disposée sur chaque côté du fuselage (2) et/ou **en ce que** l'empennage (7) est relié au fuselage (2) par deux entretoises (8) espacées l'une de l'autre dans la direction transversale, en particulier sur une aile (11) respective.

10. Autogire selon l'une ou plusieurs des revendications précédentes, **caractérisé en ce que** l'empennage (7) comprend un empennage vertical (18) disposé coaxialement au prolongement (9) d'empennage, qui formé en un corps avec celle-ci et/ou forme une partie du contour extérieur aérodynamique.

11. Autogire selon l'une ou plusieurs des revendications précédentes, **caractérisé en ce que** l'empennage (7) présente trois sections (15a, 15b, 15c) d'empennage, sachant qu'au moins une section (15b) d'empennage est formée en tant que l'empennage vertical (18) avec gouvernail de direction et les trois sections (15a, 15b, 15c) d'empennage sont espacées dans la direction transversale de l'autogire.

12. Autogire selon l'une ou plusieurs des revendications précédentes, **caractérisé en ce que** l'empennage (7) présente une surface porteuse (16) disposée dans la direction transversale de l'autogire et/ou que les sections (15) d'empennage sont disposées orientées vers le bas sur cette surface porteuse (16), de sorte que deux sections (15) d'empennage adjacentes et la surface porteuse (16) forment respectivement une forme en U dirigée vers le bas.
